# EUROPÄISCHE PATENTANMELDUNG

(11) **EP 4 674 540 A1**
(43) Veröffentlichungstag der Anmeldung: **07.01.2026**
(21) Anmeldenummer: 25183260.6
(22) Anmeldetag: 17.06.2025
(51) Int. Cl.: B08B 7/00

(54) **VORRICHTUNG ZUR KOLLEKTIVEN BEHANDLUNG VON OBERFLÄCHEN EINER VIELZAHL VON OBJEKTEN**

(30) Priorität: 04.07.2024 DE 202024103668 U
(71) Anmelder: SLCR Lasertechnik GMBH, 52379 Langerwehe (DE)
(72) Erfinder: SCHULZ-GAUS, Olav G., 50126 Bergheim (DE)
(74) Vertreter: Paul & Albrecht Patentanwälte PartG mbB

(57) **Zusammenfassung**

Die vorliegende Erfindung betrifft eine Vorrichtung (1) zur kollektiven Behandlung von Oberflächen einer Vielzahl von Objekten, mit einer Aufnahmeeinrichtung (2), die eine drehbare Trommel aufweist, die einen Aufnahmeraum (8) zur Aufnahme von zu behandelnden Gegenständen definiert, und einer Bestrahlungseinrichtung (4), die so angeordnet und ausgebildet ist, dass sie Strahlung in den Aufnahmeraum (8) der Trommel (6) einleitet und so Oberflächen der in den Aufnahmeraum (8) eingebrachten Gegenstände behandelt, wobei die Bestrahlungseinrichtung (4) an einem Gelenkarmroboter (3) oder an einem mehrachsigen Linearsystem (14) gehalten und relativ zur Aufnahmeeinrichtung (2) bewegbar ist.

## Beschreibung

Die vorliegende Erfindung betrifft eine Vorrichtung zur kollektiven Behandlung von Oberflächen einer Vielzahl von Objekten.

Derartige Vorrichtungen sind grundsätzlich bekannt. Sie werden in erster Linie dazu eingesetzt, die Oberflächen einer Vielzahl von Bauteilen zeitgleich zu reinigen, aufzurauen, oder dergleichen. Eine aus der EP 3 932 572 A1 bekannte Vorrichtung weist hierzu eine Aufnahmeeinrichtung auf, welche einen Aufnahmeraum definiert, in welchen die zu behandelnden Bauteile in loser Schüttung eingebracht werden. Des Weiteren ist eine Bestrahlungseinrichtung vorgesehen, um die in dem Aufnahmeraum befindlichen Bauteile mit Laserstrahlung zu bestrahlen. Dabei werden die zu bestrahlenden Bauteile durchmischt, indem die Aufnahmeeinrichtung als Ganzes oder eine das Schüttgut aufnehmende Trommel der Aufnahmeeinrichtung bewegt wird.

Es hat sich gezeigt, dass durch die bekannte Vorrichtung sehr gute Reinigungsergebnisse erzielt werden können. Die Bestrebungen gehen jedoch dahin, die Behandlungsqualität weiterhin zu verbessern.

Vor diesem Hintergrund liegt der vorliegenden Anmeldung die Aufgabe zugrunde, eine Vorrichtung zur kollektiven Behandlung von Oberflächen einer Vielzahl von Objekten der eingangsgenannten Art mit verbessertem Aufbau zu schaffen.

Zur Lösung dieser Aufgabe schafft die vorliegende Erfindung eine Vorrichtung (1) zur kollektiven Behandlung von Oberflächen einer Vielzahl von Objekten umfassend eine Aufnahmeeinrichtung mit einer Trommel, die einen durch eine obere Trommelöffnung zugänglichen Aufnahmeraum zur Aufnahme von zu behandelnden Objekten bildet, einer Trommelaufnahme, in welche die Trommel einsetzbar ist, einer Antriebseinrichtung, die dazu ausgelegt ist, die in die Trommelaufnahme eingesetzte Trommel relativ zur Trommelaufnahme drehend um eine Rotationsachse anzutreiben, und einer die Trommelaufnahme aufnehmenden Schwenkeinrichtung, die dazu ausgelegt ist, die Trommelaufnahme durch Schwenken um eine Schwenkachse in verschiedenen Schwenkpositionen anzuordnen, wobei die Schwenkpositionen eine Beschickungsposition, in welcher die Trommel vertikal von oben in die Trommelaufnahme eingesetzt und vertikal nach oben aus dieser entnommen werden kann, und eine Arbeitsposition aufweisen, in welcher die Trommelaufnahme gegenüber der Beschickungsposition um einen ersten Schwenkwinkel zur Vertikalen gekippt ist, der insbesondere in einem Bereich zwischen 30° und 60° liegt, und eine Bestrahlungseinrichtung, die angeordnet und ausgebildet ist, um in der Arbeitsposition der Trommelaufnahme Strahlung in den Aufnahmeraum der in der Trommelaufnahme aufgenommenen Trommel einzubringen und so Oberflächen der in den Aufnahmeraum eingebrachten Objekte zu behandeln, wobei die Bestrahlungseinrichtung an einem Knickarmroboter oder an einem Mehrachslinearsystem gehalten und relativ zur Aufnahmeeinrichtung bewegbar ist.

In der Beschickungsposition kann die Trommel von oben beispielsweise unter Verwendung eines Krans mit den in ihr aufgenommenen Objekten in die Trommelaufnahme eingesetzt werden. Alternativ kann die in der Trommelaufnahme gehaltene Trommel in der Beschickungsposition mit den Objekten gefüllt werden, beispielsweise über eine Rutsche oder dergleichen. Nach Überführung der Trommel in die Arbeitsposition durch Schwenken der Trommelaufnahme um die Schwenkachse kann dann die Reinigung der Objekte unter Einsatz der Bestrahlungseinrichtung erfolgen, welche die Objekte durch die Trommelöffnung bestrahlt, während die Trommel zur Durchmischung der Objekte um die Rotationsachse gedreht, insbesondere taumelnd bewegt wird. Dank der Anordnung der Bestrahlungseinrichtung an einem Knickarmroboter oder an einem Mehrachslinearsystem lässt sich diese optimal zur Trommel ausrichten, wodurch eine optimale Behandlungsqualität des Schüttgutes erreicht werden kann. Auch lässt sich die Ausrichtung der Bestrahlungseinrichtung zur Trommel während der Bearbeitung ändern, was ebenfalls einer Prozessoptimierung zuträglich sein kann. Nach Abschluss der Behandlung wird die Trommelaufnahme zurück in ihre Beschickungsposition überführt, dann die Trommel mit den behandelten Objekten entnommen und durch eine Trommel mit neuen zu behandelnden Objekten ersetzt. Insgesamt wird somit ein sehr effektives Verfahren zur kollektiven Behandlung von Oberflächen einer Vielzahl von Objekten ermöglicht.

Bevorzugt handelt es sich bei der Behandlung um eine Oberflächenreinigungs- und/oder um eine Oberflächenaufraubehandlung, die insbesondere dazu dient, die Bauteiloberflächen für ein sich anschließendes Oberflächenbeschichtungsverfahren vorzubereiten.

Bei den Objekten handelt es sich bevorzugt um Schüttgut, insbesondere um metallisches Schüttgut, beispielsweise in Form von metallischen Kleinteilen wie Schrauben, Muttern, Klipse, Beschlagteilen oder dergleichen.

Gemäß einer Ausgestaltung der vorliegenden Erfindung verläuft die Rotationsachse zentral durch die Trommelöffnung der in die Trommelaufnahme eingesetzten Trommel und ist insbesondere senkrecht zu einer Ebene der Trommelöffnung ausgerichtet.

Die Schwenkachse erstreckt sich vorteilhaft horizontal.

Die Schwenkachse und die Rotationsachse stehen bevorzugt senkrecht zueinander.

Gemäß einer Ausgestaltung der vorliegenden Erfindung weisen die Schwenkpositionen eine Entladeposition auf, in welcher die Trommelaufnahme gegenüber der Beschickungsposition um einen zweiten Schwenkwinkel zur Vertikalen gekippt ist, wobei der zweite Schwenkwinkel insbesondere in einem Bereich zwischen 150° und 210° liegt. Bei der Überführung der Trommel in die Entladeposition werden in der Trommel aufgenommene Objekte einfach ausgeschüttet.

Vorteilhaft weist die Bestrahlungseinrichtung wenigstens eine Strahlungsquelle auf, die insbesondere als Laserstrahlquelle ausgebildet ist.

Bevorzugt umfasst jede Strahlungsquelle eine zugeordnete Optik.

Vorteilhaft weist die Aufnahmeeinrichtung eine Absaugeinrichtung auf, um Prozessdämpfe aus dem Aufnahmeraum der in der Trommelaufnahme aufgenommenen Trommel abzusaugen, wodurch das Arbeitsergebnis und die Arbeitssicherheit verbessert werden.

Bevorzugt weist die Vorrichtung eine von oben zugängliche Schutzkabine auf, innerhalb der die Aufnahmeeinrichtung, die Bestrahlungseinrichtung und der Knickarmroboter angeordnet sind.

Hinsichtlich weiterer Ausgestaltungen der Erfindung wird auf die nachfolgende Beschreibung der Ausführungsbeispiele unter Bezugnahme auf die beiliegende Zeichnung verwiesen.

In der Zeichnung ist
- Figur 1: eine schematische Frontansicht einer Vorrichtung gemäß einer ersten Ausführungsform der vorliegenden Erfindung, die zur kollektiven Behandlung von Oberflächen einer Vielzahl von Objekten dient, wobei in eine Trommelaufnahme, die in einer Beschickungsposition angeordnet ist, eine zu bearbeitende Objekte aufweisende Trommel eingesetzt wird;
- Figur 2: eine schematische Frontansicht der in Figur 1 gezeigten Vorrichtung, bei der die Trommel in der Trommelaufnahme aufgenommen ist;
- Figur 3: eine schematische Frontansicht der in Figur 1 gezeigten Vorrichtung während der Oberflächenbehandlung, wobei sich die Trommelaufnahme in einer Arbeitsposition befindet;
- Figur 4: eine schematische Frontansicht der in Figur 1 gezeigten Vorrichtung, wobei die die Trommelaufnahme in einer Entladeposition befindet; und
- Figur 5: eine schematische Frontansicht einer Vorrichtung gemäß einer zweiten Ausführungsform der vorliegenden Erfindung, die zur kollektiven Behandlung von Oberflächen einer Vielzahl von Objekten dient, wobei sich eine Trommelaufnahme in einer Arbeitsposition befindet.

Gleiche Bezugsziffern bezeichnen nachfolgend gleiche oder gleichartige Komponenten.

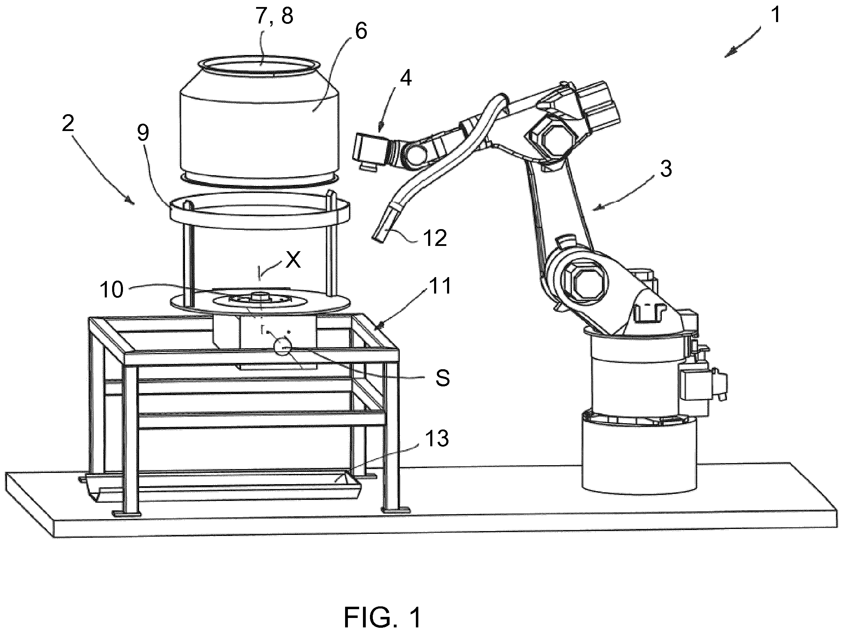

Die Figuren 1 bis 4 zeigen eine Ausführungsform einer erfindungsgemäßen Vorrichtung 1 zur kollektiven Behandlung von Oberflächen einer Vielzahl von Objekten. Genauer gesagt dient die Vorrichtung 1 zur Oberflächenbehandlung von insbesondere metallischem Schüttgut in Form von Schrauben, Muttern, Klipsen, Beschlagteilen oder sonstigen Kleinteilen. Ziel der Behandlung ist insbesondere eine Reinigung und/oder Aufrauung und/oder ein Entgraten der Objektoberflächen. Die Vorrichtung 1 umfasst als Hauptkomponenten eine Aufnahmeeinrichtung 2 und eine an einem Knickarmroboter 3 gehaltene Bestrahlungseinrichtung 4, die bevorzugt in einer Schutzkabine oder dergleichen angeordnet sind, auch wenn dies vorliegend nicht dargestellt ist.

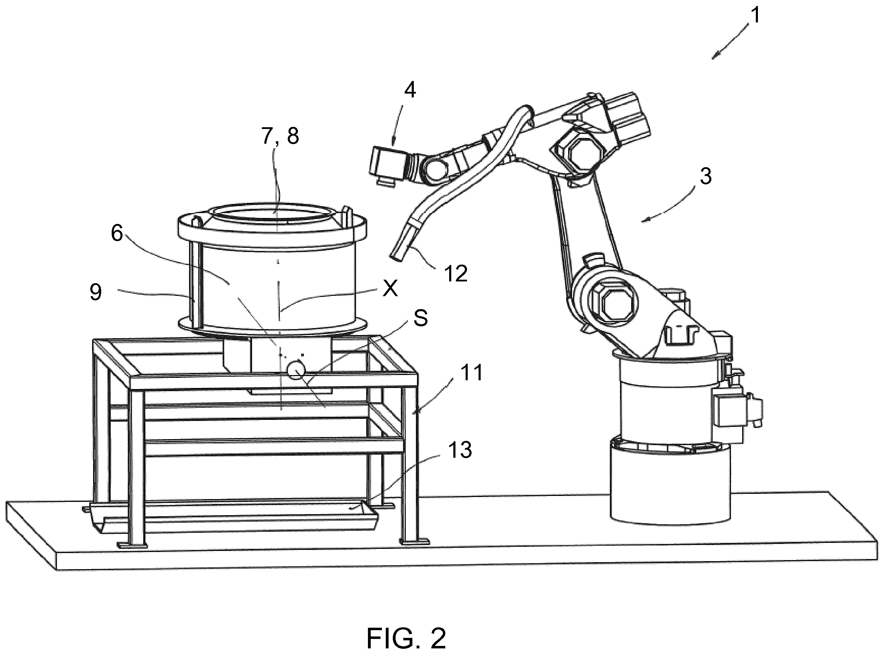

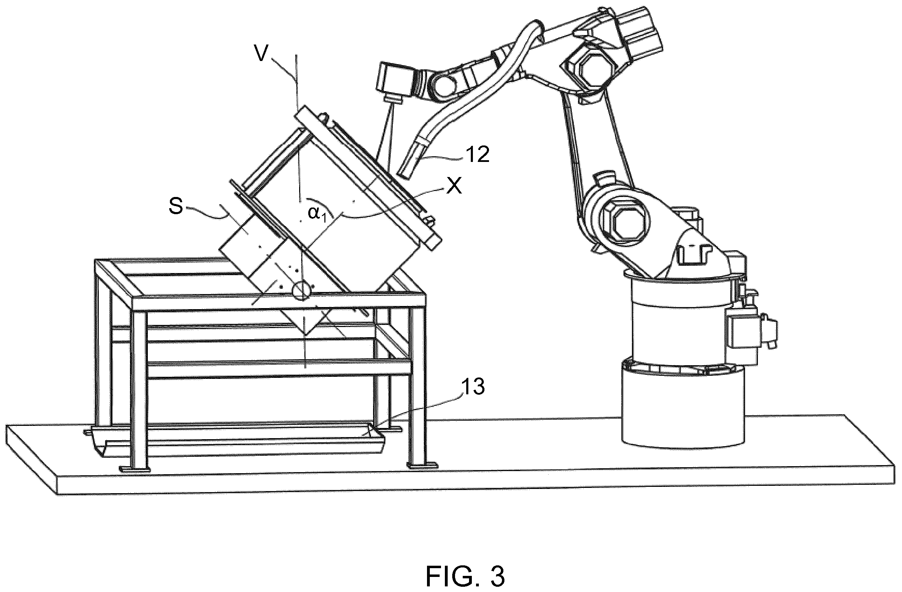

Die Aufnahmeeinrichtung 2 weist eine Trommel 6 auf, die einen durch eine obere Trommelöffnung 7 zugänglichen Aufnahmeraum 8 bildet, der zur Aufnahme von zu behandelnden Objekten dient. Ferner umfasst die Aufnahmeeinrichtung 2 eine Trommelaufnahme 9, in welche die Trommel 6 einsetzbar ist, und eine Antriebseinrichtung 10, mit der die in die Trommelaufnahme 9 eingesetzte Trommel 6 rotierend und/oder taumelnd rotierend um eine Rotationsachse X relativ zur Trommelaufnahme 9 gedreht werden kann. die Rotationsachse X verläuft vorliegend zentral durch die Trommelöffnung 7 der in die Trommelaufnahme 9 eingesetzten Trommel 6 und ist insbesondere senkrecht zu einer Ebene der Trommelöffnung 7 ausgerichtet. Zu diesem Zweck geeignete Antriebseinrichtungen sind im Stand der Technik grundsätzlich bekannt, weshalb sie vorliegend nicht im Detail dargestellt sind. Beispielsweise können umfänglich im Innern der Trommelaufnahme 9 positionierte Antriebsräder dazu genutzt werden, die Trommel 6 drehend anzutreiben. Zudem weist die Aufnahmeeinrichtung 2 eine Schwenkeinrichtung 11 auf, an der die Trommelaufnahme 9 schwenkbar um eine sich vorliegend horizontal und senkrecht zur Rotationsachse X erstreckende Schwenkachse S gehalten ist. Die Schwenkeinrichtung 11 ist vorliegend dazu ausgelegt, die Trommelaufnahme 9 zwischen einer Beschickungsposition, in welcher die Trommel 6 vertikal von oben in die Trommelaufnahme 9 eingesetzt und vertikal nach oben aus dieser entnommen werden kann, wie es in den Figuren 1 und 2 gezeigt ist, einer in Figur 3 dargestellten Arbeitsposition, in welcher die Trommelaufnahme 9 gegenüber der Beschickungsposition um einen Schwenkwinkel α₁ zur Vertikalen V gekippt ist, und einer Entladeposition, in welcher die Trommelaufnahme 9 gegenüber der Beschickungsposition um einen zweiten Schwenkwinkel α₂ zur Vertikalen V gekippt ist, zu schwenken. Der erste Schwenkwinkel α₁ liegt bevorzugt in einem Bereich zwischen 30° und 60°, der zweite Schwenkwinkel α₂ bevorzugt in einem Bereich zwischen 150° und 210°. Einen weiteren Bestandteil der Vorrichtung 1 bildet vorliegend eine Absaugeinrichtung 12, die dazu ausgelegt ist, Prozessdämpfe aus dem Aufnahmeraum 8 der in der Trommelaufnahme 9 aufgenommenen Trommel 6 abzusaugen.

Die Bestrahlungseinrichtung 4 ist dazu ausgebildet, um in der Arbeitsposition der Trommelaufnahme 9 durch die Trommelöffnung 7 Strahlung in den Aufnahmeraum 8 der in der Trommelaufnahme 9 aufgenommenen Trommel 6 einzubringen und so in den Aufnahmeraum 8 eingebrachte Objekte zu behandeln. Die Bestrahlungseinrichtung 4 umfasst in dem dargestellten Ausführungsbeispiel eine Laserstrahleinrichtung in Form eines Laserkopfes. Ferner kann die Bestrahlungseinrichtung 4 zusätzlich eine dem Laserkopf zugeordnete Optik aufweisen.

Der Knickarmroboter 3 weist bevorzugt sieben Bewegungsachsen auf, so dass die an diesem gehaltene Bestrahlungseinrichtung 4 relativ zur Trommel 6 bzw. Trommelöffnung 7 frei bewegbar ist.

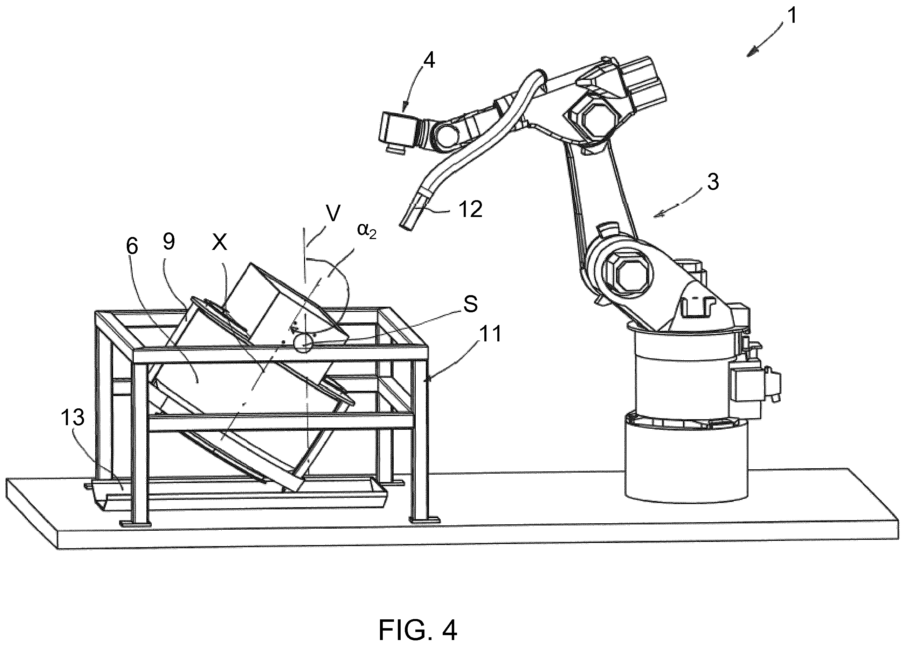

Zur Behandlung von Objekten werden diese in einem ersten Schritt als Schüttgut in den Aufnahmeraum 8 der Trommel 6 eingebracht. Anschließend wird die Trommel 6 beispielsweise unter Verwendung eines Krans vertikal von oben in die in ihrer Beschickungsposition angeordnete Trommelaufnahme 9 eingesetzt, wie es in den Figuren 1 und 2 gezeigt ist. Anschließend wird die Trommel 6 durch Schwenken der Trommelaufnahme 9 um die Schwenkachse S in ihre in Figur 3 gezeigte Arbeitsposition überführt und die Bestrahlungseinrichtung 4 unter Einsatz des Knickarmroboters 3 derart relativ zur Trommel 6 beziehungsweise zur Trommelöffnung 7 ausgerichtet, dass die von der Bestrahlungseinrichtung 4 emittierte Strahlung auf die im Aufnahmeraum 8 der Trommel 6 angeordneten Objekte gerichtet wird. Nunmehr erfolgt die Reinigung der Objekte unter Einsatz der Bestrahlungseinrichtung 4, während die Trommel zur Durchmischung der Objekte um die Rotationsachse X gedreht, insbesondere taumelnd bewegt wird. Nach Abschluss der Behandlung wird die Trommelaufnahme 9 zurück in ihre Beschickungsposition überführt, dann die Trommel 6 mit den behandelten Objekten entnommen und durch eine Trommel 6 mit neuen zu behandelnden Objekten ersetzt. Alternativ können die Bearbeiteten Bauteile aus der Trommel 6 beispielsweise in eine Wanne 13 geschüttet werden, indem die Trommelaufnahme 9 in die in Figur 4 gezeigte Entladeposition bewegt wird. Die Trommel 6 kann dann in der Beschickungsposition der Trommelaufnahme 9 entweder ausgetauscht oder mit neuen Objekten gefüllt werden, beispielsweise über ein nicht näher dargestellte Rutsche. Insgesamt wird somit ein sehr effektives Verfahren zur kollektiven Behandlung von Oberflächen einer Vielzahl von Objekten erzielt.

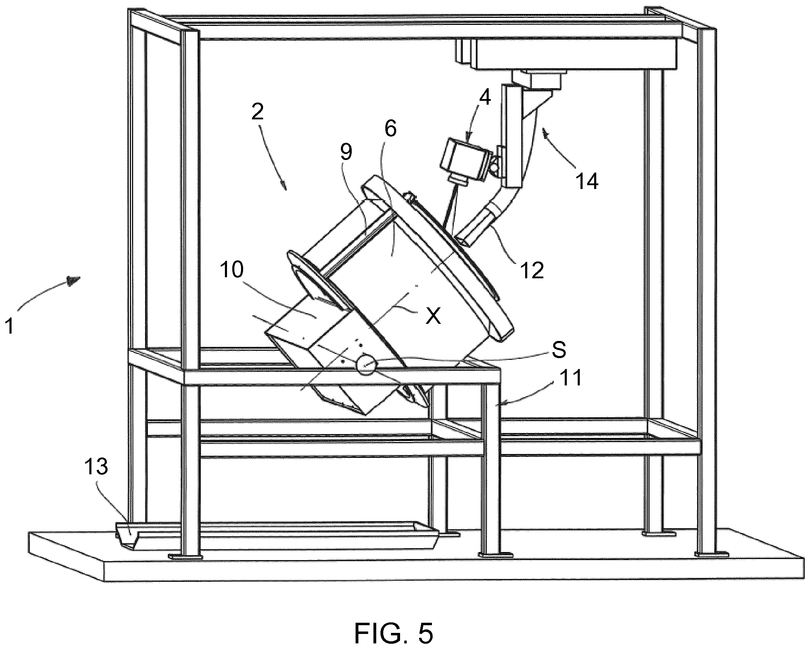

Figur 5 zeigt eine Vorrichtung gemäß einer weiteren Ausführungsform der vorliegenden Erfindung, die sich vor allem dahingehend von der zuvor beschriebenen Ausführungsform unterscheidet, dass die Bestrahlungseinrichtung 4 nicht über einen Knickarmroboter 3 sondern über ein Mehrachslinearsystem 14 bewegt wird.

## Patentansprüche

1. Vorrichtung (1) zur kollektiven Behandlung von Oberflächen einer Vielzahl von Objekten umfassend
eine Aufnahmeeinrichtung (2) mit einer Trommel (6), die einen durch eine obere Trommelöffnung (7) zugänglichen Aufnahmeraum (8) zur Aufnahme von zu behandelnden Objekten bildet, einer Trommelaufnahme (9), in welche die Trommel (6) einsetzbar ist, einer Antriebseinrichtung (10), die dazu ausgelegt ist, die in die Trommelaufnahme (9) eingesetzte Trommel (6) relativ zur Trommelaufnahme (9) drehend um eine Rotationsachse (X) anzutreiben, und einer die Trommelaufnahme (9) aufnehmenden Schwenkeinrichtung (11), die dazu ausgelegt ist, die Trommelaufnahme (9) durch Schwenken um eine Schwenkachse (S) in verschiedenen Schwenkpositionen anzuordnen, wobei die Schwenkpositionen eine Beschickungsposition, in welcher die Trommel (6) vertikal von oben in die Trommelaufnahme (9) eingesetzt und vertikal nach oben aus dieser entnommen werden kann, und eine Arbeitsposition aufweisen, in welcher die Trommelaufnahme (9) gegenüber der Beschickungsposition um einen ersten Schwenkwinkel (α₁) zur Vertikalen (V) gekippt ist, der insbesondere in einem Bereich zwischen 30° und 60° liegt, und
eine Bestrahlungseinrichtung (4), die angeordnet und ausgebildet ist, um in der Arbeitsposition der Trommelaufnahme (9) Strahlung in den Aufnahmeraum (8) der in der Trommelaufnahme (9) aufgenommenen Trommel (6) einzubringen und so Oberflächen der in den Aufnahmeraum (8) eingebrachten Objekte zu behandeln,
wobei die Bestrahlungseinrichtung (4) an einem Knickarmroboter (3) oder an einem Mehrachslinearsystem (14) gehalten und relativ zur Aufnahmeeinrichtung (2) bewegbar ist.

2. Vorrichtung (1) nach Anspruch 1, **dadurch gekennzeichnet, dass** es sich bei der Behandlung um eine Oberflächenreinigungs- und/oder um eine Oberflächenaufraubehandlung handelt.

3. Vorrichtung (1) nach Anspruch 1 oder 2, **dadurch gekennzeichnet, dass** es sich bei den Objekten um Schüttgut handelt.

4. Vorrichtung (1) nach einem der vorhergehenden Ansprüche, **dadurch gekennzeichnet, dass** die Rotationsachse (X) zentral durch die Trommelöffnung (7) der in die Trommelaufnahme (9) eingesetzten Trommel (6) verläuft und insbesondere senkrecht zu einer Ebene der Trommelöffnung (7) ausgerichtet ist.

5. Vorrichtung (1) nach einem der vorherigen Ansprüche, **dadurch gekennzeichnet, dass** sich die Schwenkachse (S) horizontal erstreckt.

6. Vorrichtung (1) nach einem der vorhergehenden Ansprüche, **dadurch gekennzeichnet, dass** die Schwenkachse (S) und die Rotationsachse (X) senkrecht zueinander stehen.

7. Vorrichtung (1) nach einem der vorherigen Ansprüche, **dadurch gekennzeichnet, dass** die Schwenkpositionen eine Entladeposition aufweisen, in welcher die Trommelaufnahme (9) gegenüber der Beschickungsposition um einen zweiten Schwenkwinkel (α₂) zur Vertikalen (V) gekippt ist, wobei der zweite Schwenkwinkel (α₂) insbesondere in einem Bereich zwischen 150° und 210° liegt.

8. Vorrichtung (1) nach einem der vorherigen Ansprüche, **dadurch gekennzeichnet, dass** die Bestrahlungseinrichtung (4) wenigstens eine Strahlungsquelle aufweist, die insbesondere als Laserstrahlquelle ausgebildet ist.

9. Vorrichtung (1) nach Anspruch 8, **dadurch gekennzeichnet, dass** jede Strahlungsquelle eine zugeordnete Optik umfasst.

10. Vorrichtung (1) nach einem der vorherigen Ansprüche, **dadurch gekennzeichnet, dass** die Aufnahmeeinrichtung (2) eine Absaugeinrichtung (10) aufweist, um Prozessdämpfe aus dem Aufnahmeraum (8) der in der Trommelaufnahme (9) aufgenommenen Trommel (6) abzusaugen.

11. Vorrichtung (1) nach einem der vorherigen Ansprüche, **dadurch gekennzeichnet, dass** diese eine von oben zugängliche Schutzkabine (5) aufweist, innerhalb der die Aufnahmeeinrichtung (2), die Bestrahlungseinrichtung (4) und der Knickarmroboter (3) angeordnet sind.
